(19) Europäisches Patentamt / European Patent Office / Office européen des brevets

(11) **EP 1 906 158 A1**

(12) **EUROPEAN PATENT APPLICATION**

(43) Date of publication:
**02.04.2008 Bulletin 2008/14**

(51) Int Cl.:
*G01F 23/284* (2006.01)  *G01F 25/00* (2006.01)

(21) Application number: **07115701.0**

(22) Date of filing: **05.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **07.09.2006 US 516897** | (71) Applicant: **Rosemount Tank Radar AB**<br>**402 51 Göteborg (SE)**<br><br>(72) Inventor: **Frövik, Christer**<br>**582 29, Linköping (SE)**<br><br>(74) Representative: **Edlund, Fabian**<br>**AWAPATENT AB**<br>**P.O. Box 11 394**<br>**404 28 Göteborg (SE)** |

(54) **Radar level gauging**

(57)     A method for determining at least one process variable of a product contained in a tank, comprising acquiring a set of distance pairs, each pair including a first distance measure of the distance to a surface of the product and a second distance measure of the distance to a fixed location in the tank beneath the product surface, each distance pair being acquired by emitting microwaves into the tank, and allowing them to propagate towards the product, receiving reflected waves from the tank, including an echo from the product surface and an echo from the fixed location, and determining said first and second distance measure based on the emitted and received microwaves. The distance pairs are used to calculate at least one of the actual distance to the fixed location and a delay factor of the product, based on a relationship between the distance to the product surface, the actual distance to the fixed location, the distance measure of the distance to the fixed location, and the delay factor.

Fig. 4

Printed by Jouve, 75001 PARIS (FR)

EP 1 906 158 A1

**Description**

<u>Technical field</u>

The present invention relates to a method for determining at least one process variable of a product contained in a tank using, by emitting microwaves into the tank and receiving a reflection of these waves.

<u>Background of the invention</u>

In conventional radar level gauging, electromagnetic energy, typically in the form of microwaves, is emitted into a tank containing a product, the level of which is to be determined. The microwaves are allowed to propagate towards the surface (either freely or by means of a guide or probe), and waves reflected from the tank are received. The reflected waves include an echo from the product surface, and possibly additional echoes, e.g. from structures in the tank interior or from medium interfaces. The received microwaves are processed together with the emitted microwaves, and a distance to the surface can be determined based on the transit time of the surface echo. If the distance to the bottom of the tank is known, the distance to the surface can be used to determine the product level (i.e. distance from bottom to product surface). If the tank geometry is known, this level determines the volume of the product, which in turn can determine the amount of product (mass), given the density.

In some situations, notably when gauging a product that is highly transparent such as a liquid gas, the bottom of the tank will cause a relatively strong reflection, sometimes strong enough to make detection of the surface echo difficult. In an attempt to overcome this problem, US 5,438,867 discloses a method to determine the distance to the surface by gauging the distance to the bottom. The method is based on the fact that the rate of propagation of the microwaves will be smaller in the product compared to in the empty tank, and the gauged distance to the bottom will therefore depend on the amount of product in the tank. As a result, the gauged distance to the bottom will be greater than the actual distance. By knowing the actual distance to the bottom and the delay factor of the product (the delay factor is equal to $\sqrt{\varepsilon_r \mu_r}$ , where $\varepsilon_r$ is the relative permittivity and $\mu_r$ is the relative permeability of the product), the gauged distance to the bottom can be used to determine the product level.

Although the delay factor of the product in general is approximately known, it is subject to variations depending on e.g. temperature and quality of the product. Relying on an approximated value when using the method in US 5,438,867 may therefore lead to inaccuracy in the level gauging process.

Further, in some cases the contents of the tank are contaminated, for example by water that has entered the tank. When the product has a lower density than water, the water will be accumulated in a layer in the bottom of the tank, and create a water-product interface. Obviously, this has implications for any radar level gauging, as the tank no longer is filled with product all the way to the bottom. The location of the interface (i.e. the amount of water present in the bottom of the tank) must therefore be determined in order to determine a correct product level or volume.

This interface will cause a reflection, and as a water is a relatively good reflector, it will make any detection of the bottom echo very difficult. In other words, the reflection from the water-product interface will take the place of the bottom reflection. It also makes it difficult to use the method described in US 5,438,867, as this method requires that the distance to the bottom reflection be known.

In order to determine the location of this interface, a "water bottom sensor" can be arranged in the tank. Such a sensor is described in US 6,353,407, and consists of a microwave reflector that is arranged to float on the water surface, in the interface between water and product. The floating reflector will cause a strong reflection of microwaves that can be used in a separate measuring channel to determine the distance to the water product interface.

A problem with the discussed prior art solutions is that they require installation of equipment in the tank. This can sometimes be complicated and expensive, making it desirable to find solutions without such requirements.

<u>Objects of the invention</u>

It is therefore an object of the present invention to overcome at least some of the above problems, and provide an improved method for locating a water-product interface in a tank. It is a further object of the invention to determine the delay factor of a product in a tank with sufficient accuracy.

<u>Disclosure of the invention</u>

These and other objects are achieved by a method for determining at least one process variable of a product contained in a tank, comprising

a) acquiring a set of distance pairs, each pair including a first distance measure of the distance to a surface of the product and a second distance measure of the distance to a fixed location in the tank beneath the product surface, each distance pair being acquired by emitting microwaves into the tank, and allowing them to propagate towards the product, receiving reflected waves from the tank, including an echo from the product surface and an echo from the fixed location, and determining said first and second distance measure based on the emitted and received microwaves, and

b) calculating at least one of an actual distance to the fixed location and a delay factor of the product, based on said set of distance pairs and a relationship between the distance to the product surface, the measured distance to the fixed location, the actual distance to the fixed location and the delay factor.

These and other objects are also achieved by a radar level gauge for determining a process variable of a product in a tank, comprising a microwave emitter for emitting microwaves into the tank, and allowing them to propagate towards the product, a microwave receiver for receiving a reflection of said microwave signal from the tank, including an echo from the product surface and an echo from the fixed location, processing circuitry arranged to determine a first distance measure of the distance to a surface of the product and a second distance measure of the distance to a fixed location in the tank beneath the product surface, based on the emitted and received microwaves, said first and second distance measures forming a distance pair, the processing circuitry further being adapted to store a set of distance pairs, and calculate at least one of the actual distance to the fixed location and a delay factor of the product, based on said set of distance pairs and a relationship between the distance to the product surface, the actual distance to the fixed location, the distance measure of the distance to the fixed location, and the delay factor.

By "fixed location" is intended a location that can be expected to remain essentially fixed during the acquiring of a set of distance pairs used for one calculation. The next time a set of distance pairs is acquired and a new calculation is made, the fixed location may have changed.

By "actual distance" is intended the actual, physical distance to the fixed location. Naturally, the result of the calculation will be an estimation of the actual distance, and it will be referred to as a calculated actual distance.

The relationship used in the calculation can for example be the same relationship that may be used to determine the distance to the surface level based on a measured distance to a fixed location, such as the bottom of the tank, if the actual distance to this location and the delay factor are known.

The method and RLG according to the present invention can thus advantageously be used as a water bottom sensor without requiring any installation of hardware in the bottom of the tank. Further, as the delay factor is indicative of the permittivity and permeability of the product, the method can advantageously be used to analyze the quality of the product in the tank.

In a simple model, the relationship is linear, and will be described in more detail in the following description of preferred embodiments.

As there are two unknown variables (the actual distance to the fixed location and the delay factor) at least two distance pairs are required to solve the system of equations. However, it is preferable to acquire more distance pairs, and make an approximation of the two unknown variables, e.g. in the least square sense.

In order to make the approximation with high reliability, the distance pairs should not be too similar. In other words, the distance pairs should preferably be acquired in a way to ensure a sufficient variation in the distance measures. One way to achieve this is to acquire a new distance pair each time the distance measure of the distance to the fixed location or the distance measure to the product surface changes more than a predetermined threshold value. This approach will take any changes of the delay factor (leading to a change in distance measure of the distance to the fixed location) into consideration.

Alternatively, each distance pair is acquired each time the product level passes a predetermined product level. By defining an appropriate number of such levels in the tank, e.g. every 10 mm, a sufficient number of distance pairs can be acquired during emptying of the tank.

Yet another approach is to acquire each distance pair as a pair of weighted values, e.g. a mean values, of distance measures determined within a given product level range (i.e. within a "slice" of the tank). Such an approach may serve to reduce the variance of each distance pair, thus improving the approximation of delay factor and actual distance to the fixed location. Further, distance pairs acquired in this way may also be weighted in relation to the variance of the weighted values in the pair, i.e. distance pairs comprising distance measures having low variance can be given a stronger weight in the approximation. Different factors, such as if the current product level is close to an interfering echo, may be cause increased variance of the distance measures, and thus a lower weighting of this distance pair.

At the same time, in order to avoid varying conditions (temperature, etc) in the tank during the acquisition process, the distance pairs should preferably be acquired within a predefined time span. Alternatively, the distance pairs may be weighted in relation to their time of acquisition, e.g. distance pairs acquired relatively recently can be given a stronger weight in the approximation.

The distance pairs used in the approximation are preferably acquired when the distance between the product surface and the fixed location is such that their respective echoes are individually detectable with sufficient accuracy. This means that the surface level should not be too close to the fixed location, as the echoes will then be difficult to separate. Neither should the product surface be too far from the fixed location, as the echo from the fixed location will then be too weak to detect (dampened by propagating through the product). The lower and upper limits of the range of this distance depend on the product and other conditions, but a typical lower limit could be around 30-60 cm, while a typical upper limit could be around 1-2 m.

The fixed location beneath the product surface can be the location of any structure or feature that will cause an echo in the received microwaves. In one embodiment, it is the bottom of the tank, and in another it is an interface between the product and a layer of a further material (typically water) present beneath the product. Other alternatives include structures in the tank such as beams or flanges.

When the fixed location is the bottom of the tank or the interface between product and another material, the product level in the tank can be determined based on the calculated actual distance to the bottom/interface and the measured distance to the product surface. Alternatively, the product level in the tank can be determined based on the calculated actual distance to the bottom/interface, the measured distance to the bottom/interface, and the delay factor.

Brief description of the drawings

This and other aspects of the present invention will now be described in more detail, with reference to the appended drawings showing a currently preferred embodiment of the invention.

Figure 1 schematically shows a tank provided with a radar level gauge suitable for performing an embodiment of a method according to the present invention.

Figure 2 shows the tank in figure 1, with a material present beneath the product in the tank.

Figures 3a and 3b are flow charts illustrating two embodiments of a method according to the present invention.

Figure 4 is a flow chart illustrating a radar level gauging process implementing an embodiment of the present invention.

Detailed description of currently preferred embodiments

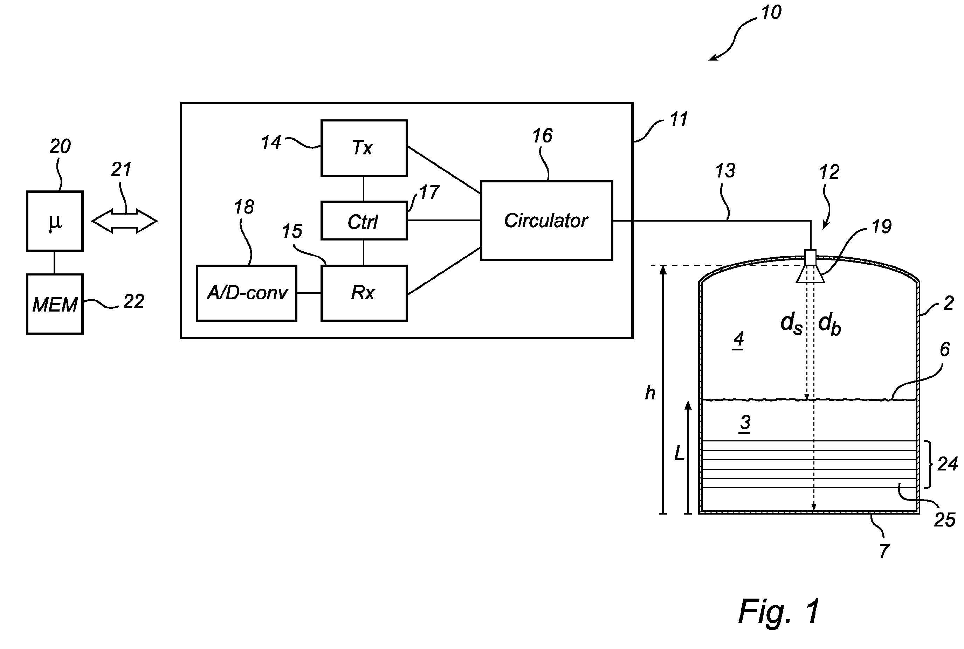

Figure 1 shows a schematic block diagram of a radar level gauge (RLG) 10 mounted in a tank 2, in which a method according to the present invention can advantageously be implemented. The gauge 10 is arranged to perform measurements to determine a process variable, here the level L of a product 3 stored in the tank 2. The product can be an oil product, such as e.g. crude oil, a liquid petroleum gas (LPG), a liquid natural gas (LNG), other liquid hydrocarbons, or liquids in general which are at least partially transparent to microwaves. Propane and butane are two typical gases stored in condensed form as liquids.

The RLG 10 comprises a microwave controller 11, a microwave emitter/receiver 12, and a signal transfer medium 13 connecting the emitter/receiver 12 to the controller 11. The controller 11 can comprise a transmitter 14, a receiver 15, a circulator 16 and any control circuitry 17 required to manage these components. Further, the controller 11 can comprise an A/D-converter 18 for digitizing a tank signal, i.e. a signal received from the tank.

The emitter/receiver 12 can, as shown in fig 1, include a free radiating antenna 19 in the top of the tank, or alternatively the emitter/receiver 12 can include a steel pipe acting as a wave guide, or a transmission probe (e.g. coaxial probe, single probe, or twin probe) extending into the tank.

The signal transfer medium 13 can be a wire or cable, but can also include more sophisticated wave guides. In case of a explosive or otherwise dangerous content in the tank 2, the signal transfer medium 13 may include an air tight seal passing through the tank wall. It is also possible that the controller 11 is connected directly to the emitter/receiver 12 with a suitable terminal, or that the emitter/receiver 12 is arranged on the same circuit board as the controller 11, in which case the signal transfer medium simply may be a track on the circuit board.

The radar level gauge 10 further includes processing circuitry 20 for communicating with the microwave controller 11 and for determining a measurement result based on a relation between transmitted and received microwaves. The controller 11 can be connected to the processing circuitry 20 by a data bus 21, and is adapted to generate a microwave signal in accordance with control data from the processing circuitry 20.

In use, the processing circuitry 20 controls the microwave controller 11 to generate and transmit a measurement signal to be emitted into the tank 2 by the emitter/receiver 12. This signal can e.g. be a pulsed signal (pulsed level gauging) or a continuous signal with a frequency varying over a certain range (Frequency Modulated Continuous Wave, FMCW). The microwave emitter 12 acts as an adapter, enabling the signal generated in the controller 11 to propagate into the tank 2 as microwaves, which can be reflected by interfaces or structures in the tank 2.

A tank signal, i.e. the emitted signal and its echo, or a mix of emitted and reflected signals, is received by the emitter/receiver 12, and communicated to the microwave controller 11, where it is received by receiver 15 and A/D converted by converter 18. The digitized signal is then provided to the processing circuitry 20 via bus 21, and the processing circuitry 20 determines a measurement result based on a relation between the emitted and received waves. The processing circuitry 20, can be implemented in designated circuits, but may also be implemented using a general purpose processor controlled by software stored in a memory 22. The memory 22 may also be used for storing various control and calibration parameters.

The microwaves are reflected by any interface between materials having different impedance in the tank 2. For example, the microwaves will be reflected by the surface 6 of product 3, i.e. by the interface between the product 3 and the tank atmosphere 4 above the product, such as air. Such a reflection, also referred to as a surface echo, will enable the processing circuitry 20 to determine the distance $d_s$ from a reference position in the RLG 10 to the surface 6. Based on the distance h from the same reference position to the bottom of the tank, the level L of the product 3 in the tank can be determined (L = h - $d_s$).

In addition to the surface reflection, the microwaves may be reflected also by the bottom 7 of the tank 2. Depending on the impedance (transparency) of the product 3, the reflection from the bottom 8 may be detectable, and in some situations it may actually be stronger than the reflection from the product surface 6. Examples of such transparent products include liquid natural gases and other liquid hydrocarbons. The bottom reflection is of course especially prominent when performing measurements on levels close to the bottom, and in particular in marine applications where the tank is in motion and the surface thus generates a poor reflection.

The detected distance $d_b$ to the bottom 7 will be displaced (appear to be larger) because the product 3 will delay the propagation of the microwaves. This fact can be used by the processing circuitry 20 to determine the product level L based on a measured distance $d_b$ to the bottom and the actual distance h to the bottom.

More specifically, the displacement caused by the product 3 will be equal to the difference between $d_b$ and h. According to physical laws, the relationship between the actual level L and the level L increased by the displacement $d_b$ - h caused by the delay, will be the delay factor of the product, $\sqrt{\varepsilon_r \mu_r}$, where $\varepsilon_r$ is the relative permittivity and $\mu_r$ is the relative permeability of the product. This relationship leads to the following equation:

$$\frac{L + d_b - h}{L} = \sqrt{\varepsilon_r \mu_r} \Rightarrow$$

$$L = \frac{d_b - h}{(\sqrt{\varepsilon_r \mu_r} - 1)}$$

Eq. 1

The level L can thus be obtained from the bottom reflection, which may be useful in situations mentioned above, i.e. when the bottom reflection is more easily detected than the reflection from the product surface 6. However, it requires that the delay factor $\sqrt{\varepsilon_r \mu_r}$ of the product is known, at least approximately.

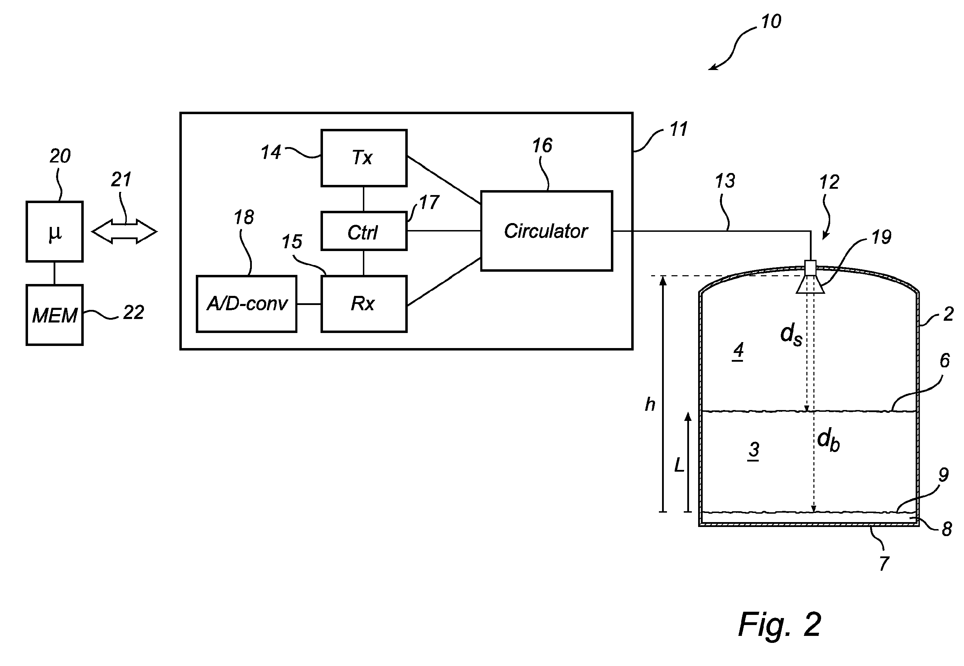

Figure 2 shows the tank 2 in figure 1 in situation where a highly reflective material 8 is located beneath the product 3. This material 8 can for example be water that has entered the tank with the product during the filling process and then has accumulated in the bottom of the tank. Instead of being reflected by the bottom 7 of the tank, the microwaves may now be reflected by an interface 9 formed between the product 3 and the material 8. When such an interface 9, here a product-water interface 9, is present, the reflection from this interface will typically be stronger than the bottom reflection, and the detected bottom reflection actually results in the distance $d_b$ to the product-water interface 9. This distance $d_b$ can then be used in a similar way as described above with relation to figure 1, to determine the product level L (here the product level measured from the interface 9), based on a known distance h to the bottom reflection (here the interface 9).

However, in contrast to the situation above, where the distance h to the bottom reflection was the distance to the bottom 7 of the tank 2, the distance h to bottom reflection is now the distance to the interface 9. This distance depends on the amount of water (or other material) 8 collected beneath the product 3, and has to be monitored.

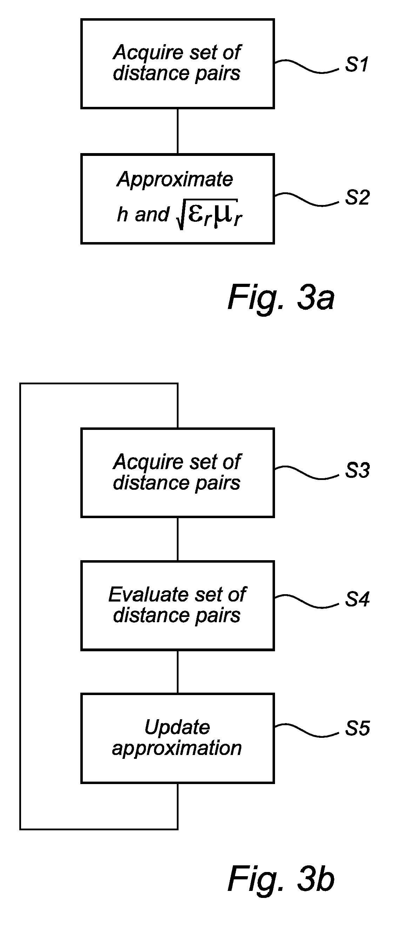

Two embodiments of a method according to the present invention is illustrated in figure 3a-3b. This method provides a way to establish not only the delay factor of the product 3, but also the exact position of the reflection from the bottom or any interface beneath the product 3. The method can be performed by the RLG 10 in figure 1, by providing the processing circuitry 20 with suitable hardware or suitable software.

With reference first to fig 3 a, in step S1 a set of distance pairs is acquired by the RLG 10, and preferably stored in the memory 22. Each distance pair comprises a detected distance $d_s$ to the product surface, as well as a detected distance $d_b$ to a fixed location beneath the product surface. In the present example, the fixed location may be the bottom 7 of the tank, or an interface 9 between the product 3 and an underlying material 8, such as water. Alternatively, the fixed location may be any other structure or feature in the tank that has a position that is essentially fixed during the acquisition of the set of distances.

The detected distances are acquired using the RLG 10 in the way outlined above, with reference to figure 1 and 2, i.e. by emitting microwaves into the tank, receiving reflected waves from the tank, and determining the detected distances based on a relationship between the emitted and received microwaves. The acquisition may be performed during normal operation of the RLG, i.e. during the continuous determination of the level L.

In step S2, the actual distance h to the fixed location and the delay factor $\sqrt{\varepsilon_r \mu_r}$ of the product are determined, using a statistical adaptation of a relationship between these entities and the detected distances.

In a preferred embodiment, the relationship in equation 1 is used to describe a linear relationship between the detected distances $d_s$ and $d_b$. Substituting $h - d_s$ for L in equation 1, results in the following equation:

$$h - d_s = \frac{d_b - h}{(\sqrt{\varepsilon_r \mu_r} - 1)} \Rightarrow$$

$$d_b = -(\sqrt{\varepsilon_r \mu_r} - 1)d_s + h\sqrt{\varepsilon_r \mu_r} = -k d_s + m$$

where $k = \sqrt{\varepsilon_r \mu_r} - 1$ and $m = h\sqrt{\varepsilon_r \mu_r}$ are factors that can be determined by statistical analysis of the set of distance pairs $(d_s; d_b)$ acquired in step S1. Such statistical analysis may include an approximation of k and m using the least square method. From the values determined for k and m, the actual distance h to the bottom 7/interface 9 and/or the product delay factor $\sqrt{\varepsilon_r \mu_r}$ can be calculated by solving the following system of linear equations:

$$\begin{matrix} k = \sqrt{\varepsilon_r \mu_r} - 1 \\ m = h\sqrt{\varepsilon_r \mu_r} \end{matrix} \Leftrightarrow \begin{matrix} \sqrt{\varepsilon_r \mu_r} = k + 1 \\ h = \frac{m}{k + 1} \end{matrix}$$

Normally, both entities will be calculated, but in some applications, where for example only the delay factor of the product is of interest, only one of the entities may be calculated.

As indicated in figure 3a, the acquisition in step S1 can be completed first, and the approximation in step S2 may be performed after acquisition of a complete set of distance pairs. However, the acquisition process and approximation can alternatively be continuous, in the sense that the approximation is updated for each newly acquired distance pair, as is indicated in figure 3b.

Here, a new distance pair is acquired in step S3, and an updated approximation can be made in step S5 for each new distance pair that is acquired (as long as at least two distance pairs have been acquired). Between these steps, in step S4, the entire set of distance pairs can be evaluated, so as to determine if any distance pairs should be omitted. For example, distance pairs with poor variance may be omitted. Steps S3 - S5 can be repeated after each measurement cycle in the RLG 10, but are preferably only repeated at certain occasions, as will be outlined below.

It should be noted that the acquisition of distance pairs $(d_s, d_b)$ in step S1 and S3 must be performed while the product level L is such that the RLG 10 can accurately detect and locate a reflection form the product surface 6 as well as from the bottom 7/interface 9. If the level L is too high, the reflection from the fixed location will be dampened by the product, and can not be accurately detected. If, on the other hand, the level L is too low, the strong reflection from the fixed location will make it difficult to detect the surface reflection.

A typical level range in which both the product surface and the bottom 7/interface 9 can be accurately detected is from around 1-2 meters above the bottom/interface down to around 30-60 cm above the bottom/interface.

The acquisition of distance pairs in step S1 or step S3 may be implemented in various ways. In a simple implementation, the distance pairs are acquired during emptying of the tank, one pair each time the level falls below a predetermined level. For example, a level range 24 between 1.5 and 0.5 m may be divided into 20 "slices" 25, and each time the level reaches a new slice a distance pair is acquired and stored. Such an approach ensures that different distance pairs are evenly distributed with respect to the distance $d_s$.

In order to increase the reliability of the approximation of k and m, each distance pair can be determined as a mean value of a plurality of measurements performed in a "slice" 25. It may also be advantageous to determine the variance of each such mean value. A distance pair resulting from a mean value with little variance can then be given a higher weight in the approximation of k and m, thereby increasing the reliability of the approximation.

Many other strategies are possible for acquiring the set of distance pairs. For example, a new distance pair can be acquired each time a change in the detected distance $d_b$ to the bottom 7/interface 9 exceeds a predetermined threshold. Such an approach will ensure that the distance pairs in the set are equally distributed in terms the distance $d_b$, taking into account any change in product delay factor. Alternatively, the distance pairs can be acquired during a predetermined time span.

It should also be pointed out that it may be advantageous to adopt different schemes for acquiring distance pairs depending on if the tank is being filled or emptied. During emptying, the position of any product-water interface, as well as the product delay factor can be expected to be constant, as typically only air is introduced into the tank. During filling, there is an increased risk that the product mix will change, leading to changes in delay factor, as well as a risk that that water will be introduced with the product, shifting the product water interface 9.

The approximation of the distance h and the product delay factor can be used in various ways in the continued radar level gauging.

If the surface reflection is detectable, thus providing an accurate distance to the product surface, the approximated distance h can be used to determine the level L as h - $d_s$. This is useful in a situation as illustrated in figure 2, where a material such as water 8 is present below the product 3, thus requiring that the distance to the product-water interface 9 be determined. The present invention thus provides an effective way to determine this distance without requiring any hardware installed in the tank. Such hardware is sometimes referred to as a water bottom sensor (WBS) and the present invention can thus be used as a software based WBS. The process in figure 3 can be repeated if a continuous monitoring of the level h and the product delay factor is desired.

In other situations, the level L can be determined based on $d_b$, h and the delay factor $\sqrt{\varepsilon_r \mu_r}$ , according to equation 1. This is useful in situations where the reflection from bottom 7/interface 9 becomes dominating, making the surface reflection difficult to detect and locate. As mentioned above, such situations may arise in a region close to the bottom of the tank, especially for highly transparent products and in marine applications. In this case, the process in figure 3 can not be repeated until the surface reflection is detectable again.

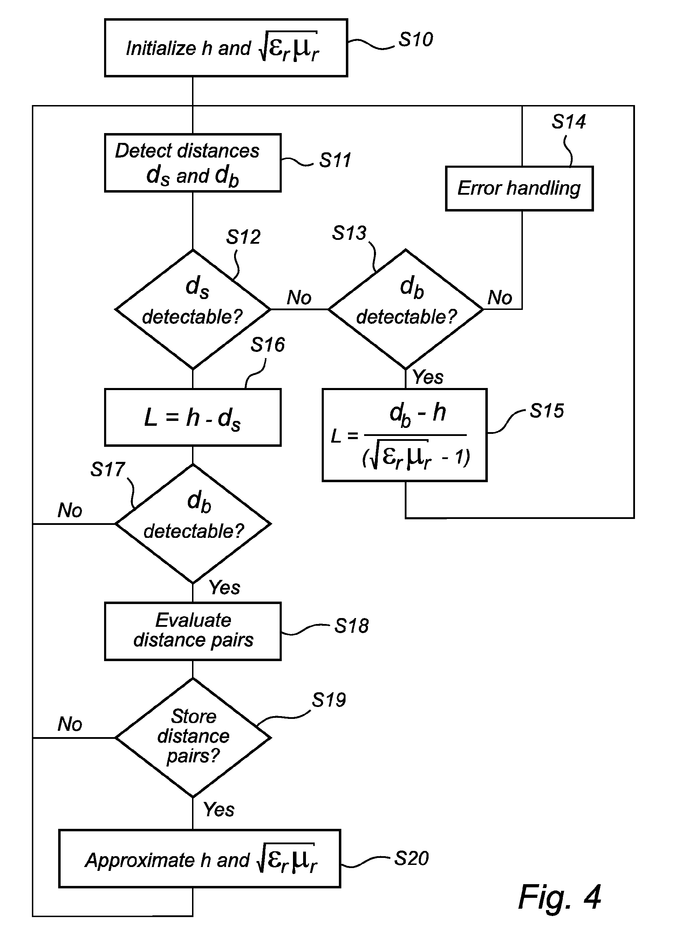

Figure 4 shows how the above described modes of operation can be combined in a combined radar level gauging process, adapted to also perform a method according to an embodiment of the invention.

In step S 11, the distance $d_s$ to the product surface and the distance $d_b$ to the bottom 7/interface 9 are detected in a conventional measurement cycle. In step S12, it is determined whether the surface reflection is detectable or not, i.e. whether the distance $d_s$ is detectable.

If $d_s$ is not detectable, possibly caused by a product level 3 too close to the bottom 7, processing continues to step S 13, to determine whether $d_b$ is detectable. If $d_b$ is not detectable either, processing returns to step S 11 for a new measurement cycle, optionally after suitable error handling in step S 14.

If $d_b$ is found to be detectable in step S 13, the level L is determined in step S 15 using equation 1 and available values for h and the delay factor. These values may have been approximated in the process described in the following steps, or be initial values initialized in step S10. After the level L has been determined, processing returns to step 11 for a new measurement cycle.

If $d_s$ is found to be detectable in step S12, indicating that the product level sufficiently high above the bottom 7, the level L is determined in step S16, using the available value for h.

Then, in step S 17, it is determined whether $d_b$ is detectable. If not, processing returns to step S11, for a new measurement cycle. If $d_b$ is detectable, the detected values $d_s$ and $d_b$ are candidates for a distance pair ($d_s$, $d_b$), and are evaluated in step 518.

Depending on the acquisition strategy, and the quality of the detected distance values (variance, etc), the distance pair may be stored in step S 19, and the set of distance pairs may be updated accordingly. In step S20, an updated approximation of h and the delay factor can be made, before the processing returns to step 11 for a new measurement cycle.

The evaluation in step S18 can be implemented so that the steps S18-S20 realize a method according to figure 3a, or a method according to fig 3b. Various types of considerations regarding which distance pairs to use and how to weigh them in the approximation may also be implemented.

According to the level gauging process in figure 4, this embodiment of the present invention thus provides a way to ensure satisfactory level gauging in the entire range of the tank, also very close to the bottom 7.

The person skilled in the art realizes that the present invention by no means is limited to the preferred embodiments described above. On the contrary, many modifications and variations are possible within the scope of the appended claims. For example, it may not be necessary to determine both the actual distance to the fixed location and the product delay factor. Further, the details of the radar level gauging process may be implemented differently, as long as it is adapted to provide a distance measure to the product surface 6, and a distance measure to a fixed location, e.g. the bottom 7 or interface 9.

## Claims

1. A method for determining at least one process variable of a product (3) contained in a tank (2), comprising acquiring a set of distance pairs (step S1), each pair including a first distance measure ($d_s$) of the distance to a surface (6) of the product and a second distance measure ($d_b$) of the distance to a fixed location (7; 9) in the tank beneath the product surface, each distance pair being acquired by:

   emitting microwaves into the tank, and allowing them to propagate towards the product,
   receiving reflected waves from the tank, including an echo from the product surface and an echo from the fixed location, and
   determining said first and second distance measure based on the emitted and received microwaves,

   **characterized in** calculating at least one of the actual distance (h) to the fixed location and a delay factor $\left( \sqrt{\varepsilon_r \mu_r} \right)$ of the product (step S2), based on said set of distance pairs and a relationship between the distance to the product surface, the actual distance to the fixed location, the distance measure of the distance to the fixed location, and the delay factor.

2. The method according to claim 1, wherein the calculation is based on a linear relationship $y = kx + m$, where y is the distance to the product surface, x is the measured distance to the fixed location, and k and m are factors indicative of the delay factor and the actual distance to the fixed location.

3. The method according to claim 2, wherein the factors k and m are approximated by applying the least square method to said set of distance pairs.

4. The method according to any one of the preceding claims, further comprising:

   defining at least two layers (25) in the tank (2),
   determining a product level (L) in the tank,
   acquiring a new distance pair each time the determined product level is determined to be in a different layer than a previously determined product level.

5. The method according to any one of the preceding claims, further comprising acquiring a new distance pair each time a change in the distance measure ($d_s$) of the distance to the product surface exceeds a predetermined threshold.

6. The method according to any one of the preceding claims, wherein a new distance pair is acquired each time a change in the distance measure ($d_b$) of the distance to the fixed location exceeds a predetermined threshold.

7. The method according to any one of the preceding claims, wherein each distance measure of each distance pair is determined as a weighted value of distance measures acquired within a given product level range.

8. The method according to claim 7, wherein said weighted value is a mean value.

9. The method according to claim 7 or 8, wherein distance pairs are given different weight in the calculation based on the variance of the weighted values.

10. The method according to any one of the preceding claims, wherein the distance pairs are acquired within a predefined time span.

11. The method according to claim 10, wherein distance pairs are given different weight in the calculation based on their time of acquisition.

12. The method according to any one of the preceding claims, wherein the distance pairs are acquired when a distance between the product surface and the fixed location is sufficiently small to allow a reflection from the fixed location to be accurately detected, and sufficiently large to allow reflections from the product surface and the fixed location to be individually detectable.

13. The method according to claim 12, wherein a lower limit of said distance is around 0.3 - 0.6 m.

14. The method according to claim 12, wherein an upper limit of said distance is around 1-2 m.

15. The method according to any one of the preceding claims, wherein the fixed location is an interface (9) between the product and a layer of a further material present beneath the product.

16. The method according to any one of the preceding claims, wherein the fixed location is the bottom of the tank (7).

17. The method according to claim 15 or 16, further comprising determining the product level (L) based on the calculated actual distance (h) to said tank bottom (7) or said interface (9) and the measured distance ($d_s$) to the product surface (step S16).

18. The method according to claim 15, further comprising determining the product level (L) based on the calculated actual distance (h) to said tank bottom (7) or said interface (9), the measured distance ($d_b$) to said tank bottom (7) or said interface (9), and said delay factor (step S15).

19. A radar level gauge used for determining a process variable of a product (3) in a tank (2), comprising:

a microwave emitter (12) for emitting microwaves into the tank, and allowing them to propagate towards the product,
a microwave receiver (15) for receiving a reflection of said microwave signal from the tank, including an echo from the product surface and an echo from the fixed location,
processing circuitry (20) arranged to determine a first distance measure of the distance to a surface of the product and a second distance measure of the distance to a fixed location in the tank beneath the product surface, based on the emitted and received microwaves, said first and second distance measures forming a distance pair,
said processing circuitry further being adapted to store a set of distance pairs, and calculate at least one of the actual distance to the fixed location and a delay factor of the product, based on said set of distance pairs and a relationship between the distance to the product surface, the actual distance to the fixed location, the distance measure of the distance to the fixed location, and the delay factor.

20. The radar level gauge according to claim 19, wherein said microwave signal is a frequency domain signal.

21. The radar level gauge according to claim 19, wherein said tank signal is a time domain reflectometry (TDR) signal.

22. The radar level gauge according to one of claims 19 - 21, wherein said signal guiding and propagating means include a free radiating antenna (19) arranged inside the tank.

23. The radar level gauge according to one of claims 19 - 21, wherein said signal guiding and propagating means include a probe extending into the tank.

24. The method according to one of claims 19 - 23, wherein the fixed location is an interface (9) between the product and a layer of a further material present beneath the product.

25. The method according to one of claims 19 - 23, wherein the fixed location is the bottom (7) of the tank.

26. The method according to claim 24 or 25, wherein said processing circuitry is further adapted to determine the product level (L) based on the calculated actual distance (h) to the bottom (7) or interface (9) and the measured distance ($d_s$) to the product surface (6).

27. The method according to claim 24 or 25, wherein said processing circuitry is further adapted to determine the product level (L) based on the calculated actual distance (h) to the bottom (7) or interface (9), the measured distance ($d_b$) to the bottom (7) or interface (9), and said delay factor $(\sqrt{\varepsilon_r \mu_r})$.

Fig. 1

*Fig. 2*

Acquire set of distance pairs — S1

Approximate $h$ and $\sqrt{\varepsilon_r \mu_r}$ — S2

Fig. 3a

Acquire set of distance pairs — S3

Evaluate set of distance pairs — S4

Update approximation — S5

Fig. 3b

$$\boxed{\text{Initialize } h \text{ and } \sqrt{\varepsilon_r \mu_r}} \quad \sim S10$$

$$\boxed{\begin{array}{c}\text{Detect distances}\\ d_s \text{ and } d_b\end{array}} \quad \sim S11$$

S14

$$\boxed{\text{Error handling}}$$

S12

$$\left\langle \begin{array}{c} d_s \\ \text{detectable?}\end{array}\right\rangle \quad \xrightarrow{\text{No}} \quad$$

S13

$$\left\langle \begin{array}{c} d_b \\ \text{detectable?}\end{array}\right\rangle \quad \xrightarrow{\text{No}}$$

S16

$$\boxed{L = h - d_s}$$

Yes

$$\boxed{L = \dfrac{d_b - h}{(\sqrt{\varepsilon_r \mu_r} - 1)}} \quad \sim S15$$

S17

$$\text{No} \xleftarrow{} \left\langle \begin{array}{c} d_b \\ \text{detectable?}\end{array}\right\rangle$$

Yes

$$\boxed{\begin{array}{c}\text{Evaluate}\\ \text{distance pairs}\end{array}} \quad \sim S18$$

S19

$$\text{No} \xleftarrow{} \left\langle \begin{array}{c}\text{Store}\\ \text{distance}\\ \text{pairs?}\end{array}\right\rangle$$

Yes

$$\boxed{\text{Approximate } h \text{ and } \sqrt{\varepsilon_r \mu_r}} \quad \sim S20$$

*Fig. 4*

## EUROPEAN SEARCH REPORT

European Patent
Office

| | Application Number |
|---|---|
| | EP 07 11 5701 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/063933 A (ENDRESS & HAUSER GMBH & CO KG [DE]; ECKERT MANFRED [DE]; SPANKE DIETMA) 22 June 2006 (2006-06-22) | 1,2,12, 16,19, 21-23, 25-27 | INV. G01F23/284 G01F25/00 |
| Y | * paragraphs [0065], [0077], [0078], [0092], [0093], [0095] - [0118], [0134]; claim 7; figures 1,3,5,6,9,10 * | 1,4-6, 10,12, 16-19, 21-23, 25-27 | |
| X | ----- US 2005/052314 A1 (SPANKE DIETMAR [DE] ET AL) 10 March 2005 (2005-03-10) | 1,10,12, 16,19, 21,22, 25,26 | |
| Y | * paragraphs [0002], [0073] - [0152]; figures 1,2,6 * | 1,4-6, 10,12, 16-19, 21-23, 25-27 | |
| Y | ----- WO 00/43739 A (ROSEMOUNT INC [US]) 27 July 2000 (2000-07-27) | 1,4-6, 10,12, 16-19, 21-23, 25-27 | TECHNICAL FIELDS SEARCHED (IPC) G01F |
| X | * page 2, line 26 - page 3, line 14 * * page 4, line 1 - page 11, line 27; figures 1-4,7-9 * | 15,24 | |
| A | ----- WO 03/016835 A (ENDRESS & HAUSER GMBH & CO KG [DE]; MUELLER ROLAND [DE]; SCHROTH HERBE) 27 February 2003 (2003-02-27) * page 9, line 8 - page 19, line 9; figures 2,3,7,8 * | 1-27 | |
| | ----- -/-- | | |

The present search report has been drawn up for all claims

| Place of search | Date of completion of the search | Examiner |
|---|---|---|
| Munich | 21 February 2008 | PAPANTONIOU, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 07 11 5701

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/083791 A (SAAB MARINE ELECTRONICS [SE]; HAEGG LENNART [SE]) 30 September 2004 (2004-09-30) * page 3, line 34 - page 6, line 20; figures 1-4 * | 1-27 | |
| | | | TECHNICAL FIELDS SEARCHED (IPC) |

The present search report has been drawn up for all claims

| Place of search | Date of completion of the search | Examiner |
|---|---|---|
| Munich | 21 February 2008 | PAPANTONIOU, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 11 5701

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2008

| Patent document cited in search report | | | Publication date | Patent family member(s) | | | Publication date |
|---|---|---|---|---|---|---|---|
| WO 2006063933 | A | | 22-06-2006 | DE | 102004061449 | A1 | 22-06-2006 |
| US 2005052314 | A1 | | 10-03-2005 | AU | 2003296626 | A1 | 22-07-2004 |
| | | | | CA | 2510583 | A1 | 15-07-2004 |
| | | | | CN | 1729385 | A | 01-02-2006 |
| | | | | DE | 10260962 | A1 | 01-07-2004 |
| | | | | WO | 2004059260 | A1 | 15-07-2004 |
| | | | | EP | 1573278 | A1 | 14-09-2005 |
| WO 0043739 | A | | 27-07-2000 | AU | 2614900 | A | 07-08-2000 |
| | | | | BR | 0004311 | A | 21-11-2000 |
| | | | | CA | 2323558 | A1 | 27-07-2000 |
| | | | | CN | 1293755 | A | 02-05-2001 |
| | | | | DE | 60034631 | T2 | 10-01-2008 |
| | | | | EP | 1066500 | A1 | 10-01-2001 |
| | | | | JP | 2002535641 | T | 22-10-2002 |
| | | | | US | 6198424 | B1 | 06-03-2001 |
| WO 03016835 | A | | 27-02-2003 | CA | 2454748 | A1 | 27-02-2003 |
| | | | | CN | 1535374 | A | 06-10-2004 |
| | | | | EP | 1412710 | A1 | 28-04-2004 |
| | | | | JP | 2005514586 | T | 19-05-2005 |
| WO 2004083791 | A | | 30-09-2004 | EP | 1606595 | A1 | 21-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5438867 A
- US 6353407 B